# FASCICULE DE BREVET EUROPEEN

(11) **EP 1 614 622 B1**
(45) Date de publication et mention de la délivrance du brevet: **12.12.2007**
(21) Numéro de dépôt: 05106147.1
(22) Date de dépôt: 06.07.2005
(51) Int. Cl.: B64C 1/00

(54) **Plancher de cockpit pour aéronef**
Flugzeugcockpitboden
Aircraft cockpit floor

(30) Priorité: 08.07.2004 FR 0407629
(43) Date de publication de la demande: 11.01.2006
(73) Titulaire: AIRBUS France, 31060 Toulouse (FR)
(72) Inventeur: Vetillard, Alban, 31130 FONSEGRIVES (FR); Parro, Emmanuel, 31300 Toulouse (FR)
(74) Mandataire: Poulin, Gérard

(56) Documents cités:
- FR-A1- 2 689 851
- FR-A1- 2 766 407
- US-A- 4 479 621
- US-A- 5 843 355

## Description

### DOMAINE TECHNIQUE

La présente invention se rapporte de façon générale à un aéronef comprenant un plancher de cockpit incorporant notamment une pluralité de longerons assemblés à une pluralité de traverses.

### ÉTAT DE LA TECHNIQUE ANTÉRIEURE

De façon connue, le plancher de cockpit d'un aéronef présente une forme adaptée au rétrécissement du fuselage rencontré dans cette partie de l'aéronef, en ce sens que sa largeur diminue en allant vers l'avant.

De plus, ce type de plancher peut s'étendre vers l'arrière jusque dans une portion cabine de l'aéronef, et constitue plus généralement le plancher de toute la partie nez de l'aéronef.

De tels planchers sont alors conçus pour répondre à plusieurs besoins spécifiques, tels que par exemple la nécessité de présenter des ouvertures pour l'intégration des palonniers de commande et de la console centrale du cockpit, permettre la marche des occupants de l'aéronef, autoriser l'installation d'équipements divers tels que des meubles électriques ou des sièges, assurer la reprise des efforts mécaniques rencontrés en cas de crash de l'aéronef, ou encore isoler électromagnétiquement la portion inférieure de la partie supérieure de cet aéronef.

L'arrière-plan technologique de l'aménagement d'un plancher d'aéronef est illustré par le document US-A-4,479,621.

De l'art antérieur, on connaît des planchers de cockpit intégrant des longerons et traverses métalliques, par exemple réalisés en aluminium ou dans l'un de ses alliages, de façon à offrir une bonne rigidité mécanique. En outre, la rigidité globale d'un tel plancher est renforcée par la présence de caissons obtenus par l'adjonction de tôles métalliques supérieure et/ou inférieure sur une partie de l'ensemble constitué par les longerons et les traverses.

Il est noté que les caissons situés aux extrémités latérales du plancher servent aussi de moyens de fixation de ce plancher sur les cadres de fuselage du cockpit, et permettent par conséquent, grâce à leur positionnement entre les cadres, de remplir une fonction de reprise des efforts s'exerçant selon la direction longitudinale et transitant entre une structure principale du plancher et les cadres de fuselage du cockpit. A titre indicatif, ces efforts s'exerçant selon la direction longitudinale se produisent principalement en cas de crash de l'aéronef, conduisant le plancher à s'appuyer fortement vers l'avant contre les cadres du fuselage. En outre, ce type d'efforts peut également être rencontré durant les phases de pressurisation de l'aéronef, provoquant un gonflage du cockpit. Néanmoins, l'intensité de ces efforts est alors beaucoup plus faible que celle observée lors d'un crash de l'aéronef.

D'autre part, les parties de l'ensemble non caissonnées sont recouvertes par un revêtement supérieur du type sandwich nid-d'abeilles, permettant notamment aux occupants de l'aéronef de pouvoir marcher sur le plancher.

Dans ce type de réalisation de l'art antérieur, il a été décelé un inconvénient majeur provenant de l'utilisation des caissons pour assurer la reprise des efforts s'exerçant selon la direction longitudinale de l'aéronef.

En effet, l'assemblage des caissons sur les cadres de fuselage est long et fastidieux à mettre en oeuvre, puisqu'il peut être nécessaire de procéder à un démontage et à un montage successifs des peaux inférieures et supérieures de ces caissons.

### EXPOSÉ DE L'INVENTION

L'invention a donc pour but de proposer un aéronef comprenant un plancher de cockpit, ce plancher remédiant au moins partiellement à l'inconvénient mentionné ci-dessus relatif aux réalisations de l'art antérieur.

Pour ce faire, on propose un plancher de cockpit pour aéronef, ce plancher comportant une pluralité de longerons s'étendant selon une direction longitudinale de l'aéronef ainsi qu'une pluralité de traverses assemblées aux longerons et s'étendant selon une direction transversale de l'aéronef, les longerons et les traverses constituant une structure primaire du plancher, ce dernier comportant également des moyens de fixation permettant son assemblage sur le fuselage de l'aéronef. Selon l'invention, les moyens de fixation comprennent une pluralité de bielles de reprise des efforts s'exerçant selon la direction longitudinale, ces bielles disposant chacune d'une extrémité arrière raccordée à la structure principale et d'une extrémité avant destinée à être raccordée au fuselage, de sorte que chaque bielle soit orientée de façon à s'écarter d'un centre du plancher en allant vers l'avant.

A titre indicatif, l'extrémité avant des bielles est donc destinée à être raccordée au fuselage, et de préférence à un voile longitudinal de fuselage monté fixement sur les cadres de fuselage.

Avantageusement, les bielles du plancher selon l'invention assurant la reprise des efforts s'exerçant selon la direction longitudinale peuvent être montées simplement et rapidement sur le fuselage de l'aéronef, en procédant uniquement à un assemblage de leur extrémité avant sur ce même fuselage, par exemple de façon articulée. A ce titre, le fait de monter l'extrémité avant sur un voile longitudinal de fuselage, assemblé fixement sur des cadres de fuselage ainsi que de préférence sur une peau externe de ce même fuselage, permet de diffuser les efforts de façon très homogène.

Il est évident que les tâches requises pour assembler de telles bielles sont largement moins contraignantes que celles visant à procéder au démontage et montage successifs de peaux inférieures et supérieures de caissons, comme cela était le cas antérieurement.

Par ailleurs, la solution de bielles est tout à fait adaptée au rétrécissement de la largeur du fuselage rencontré dans la partie cockpit de l'aéronef.

Bien entendu, il est à comprendre que les bielles ainsi disposées sont destinées à travailler en compression en cas de crash de l'aéronef, et à être sollicitées en traction durant les phases de pressurisation de l'aéronef provoquant un gonflage du compartiment concerné. Cependant, il est précisé que le rôle principal de ces bielles est bien de permettre la reprise des efforts en cas de crash de l'aéronef, la fonction de reprise des efforts s'exerçant selon la direction longitudinale lors des phases de pressurisation n'étant donc que secondaire.

Par conséquent, un tel plancher de cockpit a pour avantage de pouvoir intégrer des bielles de reprise des efforts longitudinaux dont la longueur est sensiblement réduite par rapport à celle de bielles qui seraient orientées de façon à s'écarter d'un centre du plancher en allant vers l'arrière, en raison du rétrécissement vers l'avant du fuselage observé au niveau de cette partie cockpit de l'aéronef. La diminution de la longueur des bielles permet ainsi de limiter fortement les problèmes de flambage lors des phases de compression des ces bielles, rencontrées en cas de crash de l'aéronef.

De préférence, l'extrémité arrière de chacune des bielles est raccordée à une extrémité de l'un des longerons et/ou à une extrémité de l'une des traverses, par l'intermédiaire d'une ferrure. Dans un tel cas où l'extrémité arrière de chaque bielle est donc raccordée à la périphérie de la structure principale, on peut prévoir que chaque ferrure associée à une bielle est d'une part montée fixement sur une extrémité de l'un des longerons et/ou sur une extrémité de l'une des traverses, et d'autre part montée de façon articulée sur l'extrémité arrière de la bielle associée. A ce titre, la solution visant à raccorder l'extrémité arrière de chacune des bielles à une extrémité de l'un des longerons est préférée à celle relative au raccordement de cette extrémité arrière à une extrémité de l'une des traverses, puisque ce sont les longerons qui sont dimensionnés pour reprendre correctement les efforts s'exerçant selon la direction longitudinale.

Ainsi, en prévoyant également que l'articulation entre la ferrure et l'extrémité arrière de la bielle associée est orientée selon une direction verticale de l'aéronef, et que l'extrémité avant de cette bielle est montée sur le fuselage par l'intermédiaire d'une articulation également orientée selon la direction verticale, il est alors évident que chaque bielle est uniquement apte à reprendre les efforts s'exerçant selon la direction longitudinale de l'aéronef et transitant entre le voile longitudinal de fuselage concerné et la structure principale du plancher.

De manière préférée, chaque ferrure est également montée fixement sur une peau avec laquelle elle est en contact, cette peau recouvrant la structure principale du plancher étant située entre la structure principale et la ferrure.

En d'autres termes, la ferrure est solidarisée conjointement à la structure principale et à la peau supérieure assemblée au-dessus de celle-ci, de sorte que les efforts transitant par la bielle peuvent être transmis simultanément à ces deux éléments, puis se propager à travers ces derniers. De plus, il est clair que le raccordement de la bielle à la peau supérieure permet une meilleure diffusion des efforts transmis.

Comme évoqué précédemment, on peut prévoir que l'extrémité avant de chacune des bielles est destinée à être montée de façon articulée sur le fuselage de l'aéronef, et de préférence sur un voile longitudinal de fuselage monté sur les cadres de fuselage.

De préférence, chaque bielle est située dans un plan défini conjointement par les directions longitudinale et transversale, et est inclinée par rapport à cette direction longitudinale d'un angle compris entre 0° et 30°. De plus, comme mentionné précédemment et en raison du rétrécissement de la largeur du fuselage rencontré à ce niveau, chaque bielle est alors orientée de façon à s'écarter d'un centre du plancher en allant vers l'avant, l'importance de cet écartement étant naturellement liée à la valeur choisie pour l'angle mentionné ci-dessus.

On peut prévoir que les longerons et les traverses, formant conjointement la structure primaire de plancher, sont tous réalisés en matériau composite. Cela permet avantageusement d'obtenir une réduction significative de la masse globale de ce plancher. A titre indicatif, la réduction de masse observée peut aller au-delà de 20% par rapport aux solutions classiques de l'art antérieur utilisant des matériaux métalliques.

Par ailleurs, les traverses et les longerons en matériau composite ne sont avantageusement plus soumis aux risques de corrosion rencontrés antérieurement.

Enfin, il est noté que le type de matériau utilisé dans le plancher selon l'invention est compatible avec l'ensemble des besoins spécifiques mentionnés ci-dessus, notamment en ce qui concerne la reprise des efforts mécaniques en cas de crash de l'aéronef.

De préférence, les longerons et les traverses sont réalisés dans un matériau composite à base de fibres de carbone imprégnées de résine. Cette résine est de préférence une résine thermoplastique, telle que de la résine PEEK, PEKK, PPS, etc.

Bien que la résine PEEK soit préférée en raison des hautes performances mécaniques qu'elle est capable de procurer, d'autres types de résine thermoplastique pourraient être utilisés, tels que de la résine dite PPS mentionnée ci-dessus et obtenue par polymérisation du sulfure de phénylène. En outre, il pourrait également être utilisé des résines thermodurcissables.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partiellement éclatée en perspective d'une partie nez d'un aéronef, ce dernier comprenant un plancher de cockpit selon un mode de réalisation préféré de la présente invention ;
- la figure 2 représente une vue en perspective de la structure primaire du plancher de cockpit représenté sur la figure 1 ;
- la figure 3 représente une vue partielle et agrandie en perspective de la figure 2, montrant plus particulièrement l'assemblage entre les sections de longeron et les traverses ;
- la figure 4 représente une vue partielle en perspective du plancher de cockpit montré sur la figure 1, ledit plancher étant représenté sans sa peau ;
- la figure 5 représente une vue de dessus du plancher de cockpit montré sur la figure 1, correspondant au plancher représenté sur la figure 4 auquel il a été assemblé une peau supérieure ainsi que des moyens de fixation permettant son assemblage sur les cadres de fuselage du cockpit ;
- la figure 6 représente une vue en perspective montrant plus spécifiquement les moyens de fixation montrés sur la figure 5 ; et
- la figure 7 représente une vue partielle et agrandie de celle montrée sur la figure 6, à laquelle il a été rajouté une partie du fuselage de l'aéronef.

### EXPOSÉ DÉTAILLÉ D'UN MODE DE RÉALISATION PRÉFÉRÉ

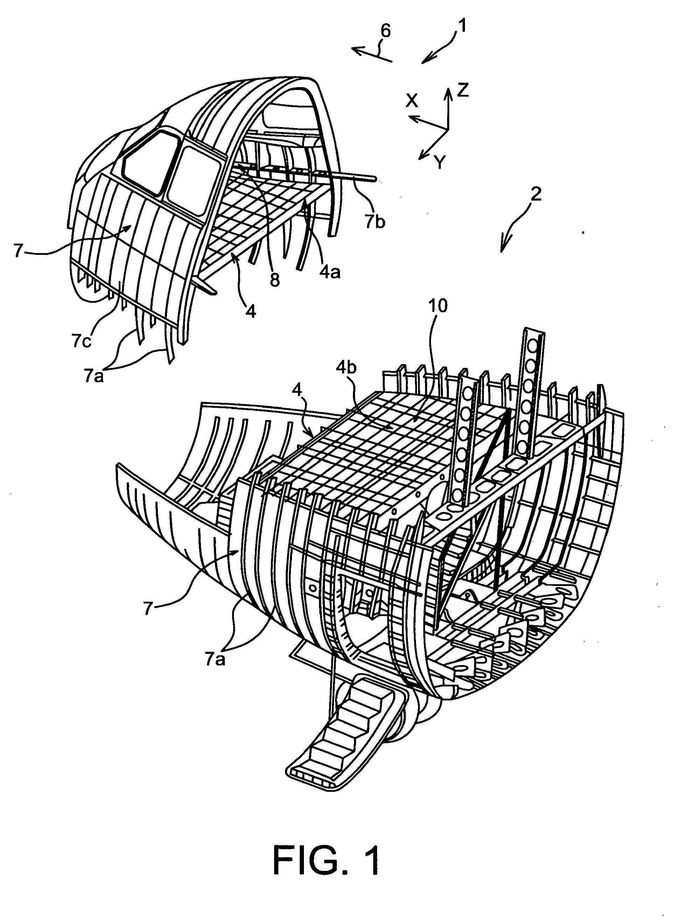

En référence à la figure 1, il est partiellement représenté l'avant d'un aéronef 1, et plus précisément la partie nez 2 de cet aéronef, comprenant un plancher de cockpit 4 selon un mode de réalisation préféré de la présente invention.

Dans toute la description qui va suivre, par convention, on appelle X la direction longitudinale de l'aéronef 1, Y la direction orientée transversalement par rapport à l'aéronef, et Z la direction verticale, ces trois directions étant orthogonales entre-elles.

D'autre part, les termes « avant » et « arrière » sont à considérer par rapport à une direction d'avancement de l'aéronef rencontrée suite à la poussée exercée par les moteurs de l'aéronef, cette direction étant représentée schématiquement par la flèche 6.

Comme on peut le voir sur la figure 1, le plancher de cockpit 4 s'étend dans un plan XY sur sensiblement toute la longueur de la partie nez 2 de l'aéronef, et est monté sur un fuselage 7 de celui-ci. Comme cela sera explicité de façon détaillée ultérieurement, le plancher de cockpit 4 est monté d'une part sur des voiles longitudinaux de fuselage 7b, eux-mêmes assemblés fixement sur des cadres de fuselage 7a et sur une peau externe de fuselage 7c, et d'autre part monté fixement sur ces mêmes cadres de fuselage 7a. A titre indicatif, les cadres 7a sont espacés les uns des autres dans la direction X de l'aéronef, et répartis de part et d'autre du plancher 4 dans la direction Y.

De plus, le plancher 4 dispose d'une forme se rétrécissant dans la direction Y en allant vers l'avant, en raison du rétrécissement du fuselage 7 dans cette même direction.

D'autre part, la partie nez 2 peut comprendre un espace avant de poste de commande 8 ainsi qu'un espace arrière de cabine 10, ces deux espaces 8, 10 étant habituellement séparés par une cloison (non représentée). De façon plus générale, la partie nez d'un aéronef et le plancher cockpit s'étendent sur environ 10 % de la longueur totale de cet aéronef selon la direction X, c'est-à-dire sur quelques mètres, et par exemple sur trois à cinq mètres. A titre d'exemple illustratif, lorsque l'aéronef est essentiellement destiné à transporter du fret et/ou des équipements militaires, sa partie nez est délimitée vers l'arrière par une zone destinée au stockage des éléments qui viennent d'être mentionnés.

Comme cela est représenté, le plancher de cockpit 4 peut éventuellement être conçu en deux parties distinctes destinées à être assemblées mécaniquement, la séparation entre une partie avant 4a et une partie arrière 4b de plancher se situant par exemple au niveau de la cloison séparant l'espace avant de poste de commande 8 et l'espace arrière de cabine 10. Néanmoins, pour faciliter la compréhension de l'invention, il sera considéré dans la suite de la description que le plancher de cockpit 4 forme un élément unique s'étendant sensiblement d'un bout à l'autre de la partie nez 2 de l'aéronef.

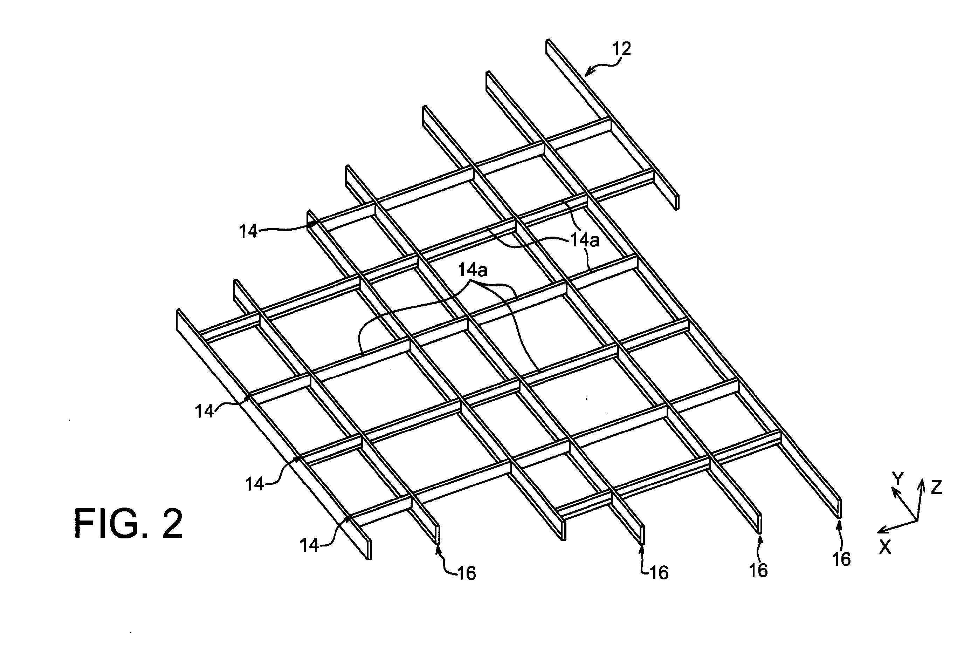

En référence à présent à la figure 2, on voit une structure primaire ou principale 12 du plancher 4 montré sur la figure 1, cette structure primaire 12 étant formée par un assemblage entre une pluralité de longerons 14 s'étendant selon la direction X, et une pluralité de traverses 16 s'étendant selon la direction Y de l'aéronef. Il est précisé que cette structure primaire 12 assure une partie importante de la rigidité globale du plancher de cockpit 4.

Les longerons 14, par exemple prévus au nombre de six, sont chacun réalisés dans un matériau composite, de préférence dans un matériau composite thermoplastique obtenu à l'aide de plis de fibres de carbone imprégnés de résine PEEK, PEKK ou PPS.

Chaque longeron 14 présente alors préférentiellement une section transversale en forme de C similaire à une forme de U incliné à 90°, qui est particulièrement facile à obtenir à l'aide d'une presse d'estampage, cette dernière permettant également de disposer facilement d'un C dont les branches supérieure et inférieure ainsi que la base du C présentent sensiblement la même épaisseur, par exemple comprise entre 2 et 5 mm.

De manière analogue, les traverses 16, par exemple prévues au nombre de sept, sont également chacune réalisées dans un matériau composite, de préférence dans un matériau composite thermoplastique obtenu à l'aide de plis de fibres de carbone imprégnés de résine PEEK, PEKK ou PPS.

Chaque traverse 16 présente alors aussi préférentiellement une section transversale en forme de C similaire à une forme de U incliné à 90°, et dont les branches supérieure et inférieure ainsi que la base du C présentent sensiblement la même épaisseur, par exemple comprise entre 2 et 5 mm.

De préférence, chaque traverse 16 est réalisée d'une seule pièce et s'étend dans la direction Y sur toute la largeur de la structure primaire 12. En revanche, chaque longeron 14 est en fait composé de plusieurs sections de longeron 14a et s'étend dans la direction X sur toute la longueur de la structure primaire 12.

Plus précisément, chaque section de longeron 14a d'un longeron 14 donné est positionnée entre deux traverses 16 directement consécutives dans la direction X, et dispose de deux extrémités assemblées rigidement respectivement à ces deux mêmes traverses 16 directement consécutives.

A cet égard, il est noté que l'avantage d'une telle configuration réside dans le fait que les branches ou semelles supérieures des sections de longeron 14a et des traverses 16 sont agencées dans un même plan XY, ces branches supérieures de C permettant par conséquent de former conjointement une surface supérieure plane de la structure primaire 12.

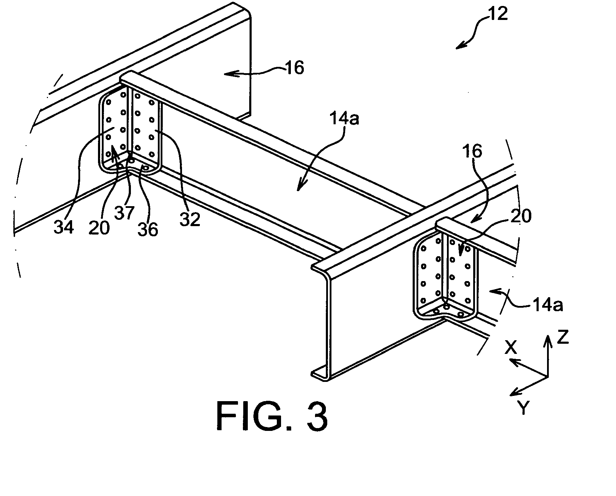

La figure 3 montre à titre indicatif que les sections de longeron 14a sont assemblées aux traverses 16 par l'intermédiaire d'éléments de jonction 20, qui sont également chacun réalisés dans un matériau composite, de préférence dans un matériau composite thermoplastique obtenu à l'aide de plis de fibres de carbone imprégnés de résine PEEK, PEKK ou PPS.

Globalement, chaque élément de jonction 20 est constitué de trois faces planes qui forment ensemble un coin de malle. En d'autres termes, un élément 20 comprend une première face plane 32 qui est orientée selon un plan XZ, une seconde face plane 34 qui est orientée selon un plan YZ, ainsi qu'une troisième face plane 36 qui est orientée selon un plan XY, chacune de ces trois faces disposant de deux arêtes de jonction (non référencées) assurant respectivement la jonction avec les deux autres faces. De plus, les trois faces 32, 34, 36 disposent de préférence d'une même épaisseur, et se rejoignent toutes en une zone sensiblement arrondie 37.

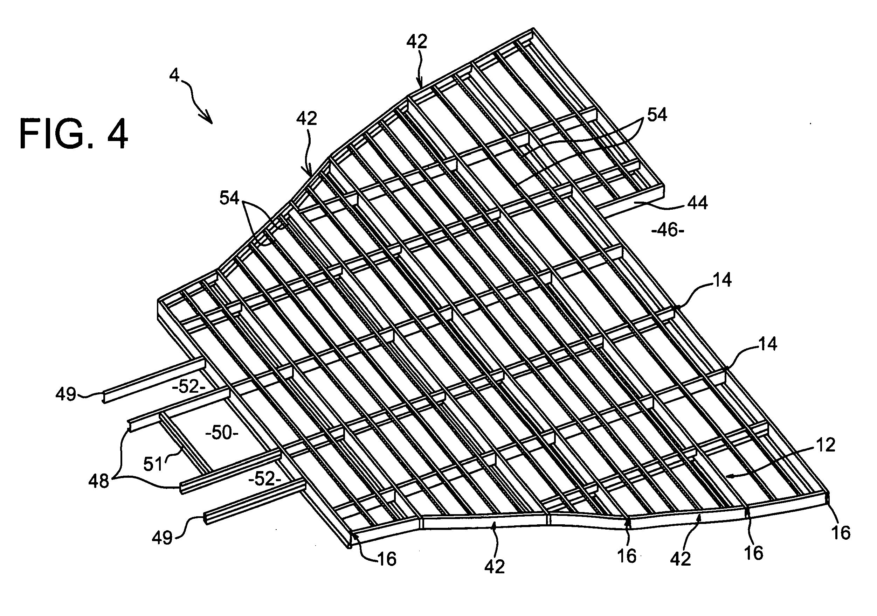

En référence à présent à la figure 4, on voit une partie du plancher de cockpit 4, ce plancher 4 comprenant la structure primaire 12 sur laquelle ont été assemblés des longerons périphériques 42, ces derniers étant identiques ou similaires aux sections de longeron 14a de la structure primaire 12. Comme on peut clairement l'apercevoir sur la figure 4, les longerons périphériques 42 permettent de relier entre elles et deux à deux les extrémités des traverses 16 de la structure primaire 12.

A titre d'exemple illustratif, il est noté que le plancher 4 est également équipé d'un petit longeron 44 situé à l'arrière de la structure primaire 12, et définissant avec une traverse arrière 16 un décrochement 46 dans la structure 12, ce décrochement 46 étant adapté pour loger un escalier (non représenté) dont une marche supérieure serait située à proximité du petit longeron 44.

D'autre part, des longerons secondaires avant 48, 49 de préférence prévus au nombre de quatre et réalisés dans un matériau composite thermoplastique obtenu à l'aide de résine PEEK, PEKK ou PPS et de plis de fibres de carbone, sont solidarisés à la traverse 16 la plus avant de la structure primaire 12.

Les deux longerons secondaires 48 situés les plus au centre délimitent conjointement un espace 50 pour recevoir une console centrale du cockpit (non représentée), et peuvent être chacun situés dans le prolongement d'un longeron 14 de la structure 12. De plus, ils peuvent être reliés l'un à l'autre à l'avant par l'intermédiaire d'une petite traverse 51 pouvant également supporter la console centrale.

D'autre part, les deux longerons secondaires 49 situés latéralement délimitent chacun avec l'un des deux longerons secondaires 48 un espace 52 pour recevoir des palonniers de commande (non représentés), de sorte que les deux espaces 52 obtenus se situent de part et d'autre de l'espace 50 dans la direction transversale Y de l'aéronef.

Le plancher de cockpit 4 présente en outre des éléments raidisseurs 54, qui s'étendent de préférence selon la direction Y, entre les traverses 16 de la structure primaire 12. A titre indicatif, les éléments raidisseurs 54 sont réalisés dans un matériau composite, de préférence dans un matériau composite thermoplastique obtenu à l'aide de résine PEEK, PEKK ou PPS et de plis de fibres de carbone, et sont par exemple prévus dans un nombre compris entre deux et cinq, entre deux traverses 16 directement consécutives dans la direction X.

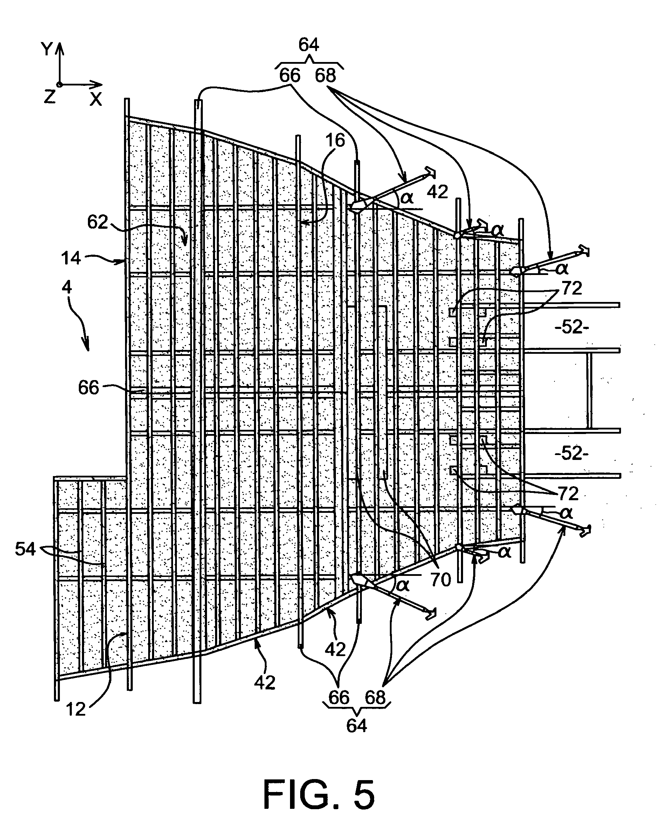

Les parties supérieures des éléments raidisseurs 54 définissent conjointement une surface supérieure qui est confondue avec la surface supérieure de la structure primaire 12, sur laquelle va reposer une peau 62 telle que celle représentée sur la figure 5.

Cette peau 62 est assemblée rigidement sur les longerons 14, les traverses 16, ainsi que sur les éléments raidisseurs 54. A cet égard, il est précisé que ces éléments 54 sont de préférence assemblés sur une surface inférieure de la peau 62, par exemple par rivetage, avant que la surface inférieure de cette peau 62 ne soit assemblée sur les branches supérieures des longerons 14 et des traverses 16.

Ici encore, la peau 62 est préférentiellement réalisée dans un matériau composite selon une épaisseur sensiblement constante, et de préférence dans un matériau composite thermoplastique obtenu à l'aide de résine PEEK, PEKK ou PPS et de plis de fibres de carbone.

Sur la figure 5, la structure primaire 12 n'étant pas recouverte par une peau inférieure, il est donc à considérer que la peau supérieure 62 forme uniquement des demi-caissons avec les longerons 14 et les traverses 16.

Toujours en référence à cette figure 5, on peut voir que le plancher 4 est équipé de moyens de fixation 64 permettant son assemblage sur le fuselage 7, et plus particulièrement sur les voiles longitudinaux 7b, ainsi que sur les cadres de fuselage 7a.

Globalement, les moyens de fixation 64 sont composés d'une pluralité d'articulations 66 autorisant une rotation selon la direction X, ainsi que d'une pluralité de bielles 68 assurant la reprise des efforts s'exerçant selon cette même direction X et transitant entre la structure rigide 12 et le fuselage 7 (non représenté sur cette figure 5).

En ce qui concerne les articulations 66 qui vont à présent être brièvement décrites, chacune d'entre elles est montée à une extrémité de l'une des traverses 16, de façon à pouvoir être fixée à un cadre de fuselage 7a situé à proximité. Plus précisément, chaque traverse 16 du plancher 4 porte deux articulations 66 respectivement agencées à ses deux extrémités.

Globalement, la présence d'une telle articulation 66 entre une traverse 16 et un cadre de fuselage 7a associé permet de bénéficier d'un véritable degré de liberté entre ces deux éléments, ce qui a pour conséquence de supprimer entièrement le moment autour de la direction longitudinale X rencontré dans les réalisations de l'art antérieur, dans lesquelles un tel moment était effectivement introduit à travers les cadres de fuselage 7a et les traverses 16 du plancher 4, principalement durant les phases de pressurisation de l'aéronef.

Ainsi, ces articulations 66 sont donc capables d'assurer la reprise des efforts s'exerçant selon les directions Y et Z et transitant entre la structure rigide 12 et les cadres de fuselage 7a du cockpit.

Quant à la reprise des efforts s'exerçant selon la direction X et transitant entre la structure rigide 12 et le fuselage 7 du cockpit, elle est assurée par les bielles 68 qui vont être présentées ci-dessous.

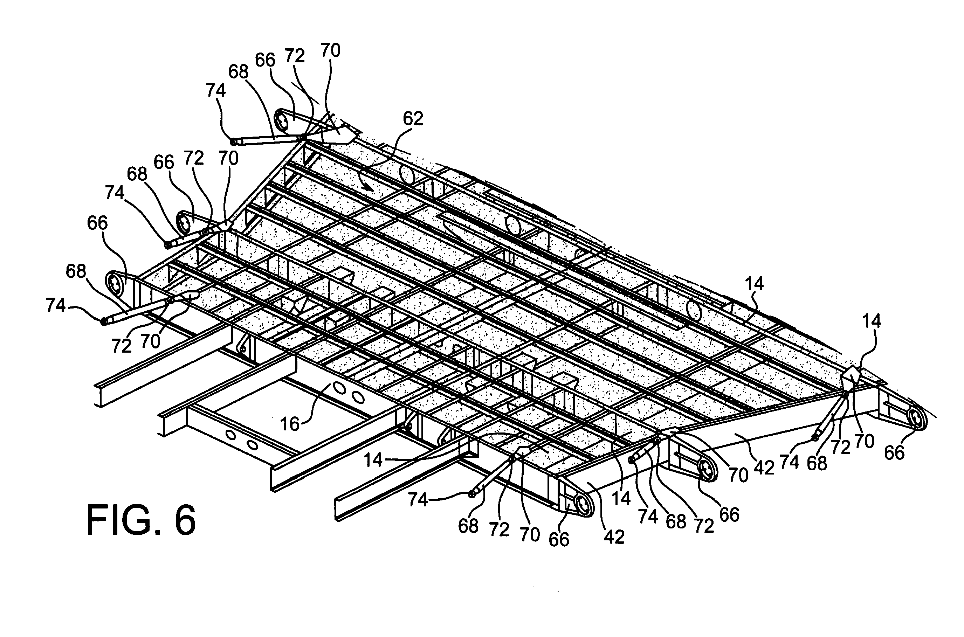

En référence conjointement aux figures 5 et 6, on peut voir que les moyens de fixation 64 comportent six bielles 68, réparties de façon symétrique par rapport à un plan XZ traversant le plancher 4 en son milieu, et passant donc par un axe principal longitudinal (non représenté) de l'aéronef.

Bien entendu, le nombre de bielles de reprise 68 peut être adapté en fonction des besoins rencontrés, sans sortir du cadre de l'invention.

Dans ce mode de réalisation préféré où chacun des deux côtés du plancher 4 est pourvu de trois bielles 68, il est noté que chacune de ces bielles 68 est associée à une ferrure 70 qui est montée fixement sur la peau supérieure 62, ainsi que sur une extrémité de l'un des longerons 14 et/ou sur une extrémité de l'une des traverses 16, la solution de montage sur une extrémité de l'un des longerons 14 étant préférée.

Plus précisément, chaque ferrure 70 est agencée sur la peau supérieure 62 à laquelle elle est solidarisée à l'aide de moyens d'assemblage classiques du type rivet, ces moyens d'assemblage traversant donc successivement, de haut en bas, la ferrure 70, la peau 62, et au moins une partie d'une extrémité de l'un des longerons 14 et/ou une partie d'une extrémité de l'une des traverses 16.

Chaque ferrure 70, qui est donc fixée à une partie périphérique de la structure rigide 12, s'étend de façon à faire partiellement saillie de cette même structure 12 dans la direction X et/ou dans la direction Y, de sorte que cette partie de la ferrure 70 faisant saillie puisse être facilement assemblée à une extrémité arrière de la bielle 68 associée.

L'assemblage s'effectue alors à l'aide d'une articulation 72 agencée entre la ferrure 70 et l'extrémité arrière de la bielle associée 68, cette articulation 72 étant orientée selon la direction Z de l'aéronef, et servant en particulier à rattraper des jeux de construction.

De la même manière, l'extrémité avant de chaque bielle 68 est quant à elle destinée à être assemblée au voile longitudinal 7b rapporté fixement sur les cadres de fuselage 7a et sur la peau externe de fuselage 7c (non représentés sur la figure 6), par l'intermédiaire d'une articulation 74 orientée selon la direction Z, de façon à ce que ces bielles 68 soient uniquement en mesure de reprendre les efforts s'exerçant selon la direction X et transitant entre les voiles longitudinaux 7b et la structure principale 12.

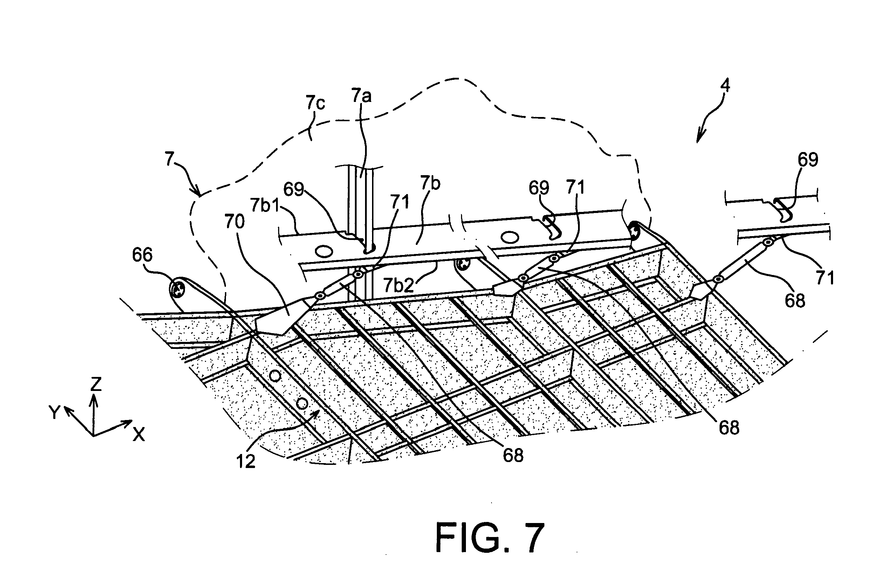

En référence plus spécifiquement à la figure 7, il va à présent être décrit de façon détaillée l'agencement entre les différents éléments du fuselage 7 et les bielles 68 du plancher 4.

Sur cette figure 7, on peut uniquement apercevoir le côté avant gauche du cockpit, mais il est bien entendu à comprendre que le côté avant droit est identique. Par conséquent, ce dernier ne sera pas davantage décrit.

On peut tout d'abord voir, comme cela est également représenté sur la figure 1, que le fuselage 7 comprend la peau externe 7c montée fixement sur les cadres de fuselage 7a, qui s'étendent chacun globalement selon un plan YZ. De plus, le fuselage 7 comporte le voile longitudinal 7b qui se situe quant à lui globalement dans un plan XY, de préférence sensiblement identique à celui dans lequel se trouve la peau supérieure 62 recouvrant la structure principale 12 du plancher 4.

Le voile longitudinal 7b, représenté de façon tronquée sur la figure 7, peut être réalisé en plusieurs tronçons, par exemple deux, et est monté fixement sur les cadres 7a ainsi que sur la peau externe 7c, de préférence à l'aide de cornières (non représentées). Dans un tel cas, on peut alors prévoir que de chaque côté du cockpit, le voile longitudinal 7b s'étend sensiblement parallèlement à la courbure de la peau externe 7c du fuselage 7 considérée dans un plan XY, sur une longueur d'environ 2,50 m, à l'aide de deux tronçons d'environ 1,25 m chacun.

Pour obtenir un contact et une fixation entre une arête externe 7b1 du voile longitudinal 7b et la face intérieure de la peau externe 7c, le voile 7b présente des évidements 69 permettant le passage des cadres de fuselage 7a. Ainsi, ces évidements 69 prennent chacun la forme d'une encoche ouverte du côté de l'arête externe 7b1 et s'étendant globalement selon la direction Y, et dont la forme est sensiblement identique à une section du cadre 7a destiné à la pénétrer.

Comme on peut le voir sur cette figure 7, l'extrémité avant de chaque bielle 68 est raccordée à l'aide d'une ferrure 71 au niveau d'une arête interne du voile longitudinal 7b. Par ailleurs, il est indiqué que pour assurer une bonne diffusion des efforts, chaque bielle 68 est placée de façon à ce que son prolongement fictif, c'est-à-dire sa ligne virtuelle de visée, intercepte une zone de jonction entre la peau externe 7c et un cadre de fuselage 7a situé à l'avant de la bielle 68 concernée.

A nouveau en référence à la figure 6, il va être décrit de façon plus détaillée le positionnement des trois ferrures 70 respectivement associées aux trois bielles de reprise 68 de l'un des deux côtés du plancher 4.

Tout d'abord en ce qui concerne la bielle de reprise 68 la plus avant, la ferrure associée 70 est fixée au-dessus de la peau 62 à un emplacement lui permettant d'être également solidarisée à une extrémité avant du deuxième longeron 14 le plus extérieur, ainsi qu'à la traverse 16 la plus avant.

La bielle 68 intermédiaire est quant à elle associée à une ferrure 70 fixée au-dessus de la peau 62 à un emplacement lui permettant d'être également solidarisée à une extrémité de la deuxième traverse 16 la plus avant, ainsi qu'éventuellement à l'un et/ou à l'autre des deux longerons périphériques 42 se raccordant au niveau de l'extrémité de traverse qui vient d'être citée. A titre indicatif, cette extrémité de traverse 16 porte également une articulation 66 orientée selon la direction X et appartenant aux moyens de fixation 64 du plancher 4, cette articulation 66 faisant saillie de l'extrémité de traverse associée dans la direction Y, comme chacune des autres articulations 66.

Enfin, la bielle 68 la plus arrière est fixée au-dessus de la peau 62 à un emplacement lui permettant d'être également solidarisée à une extrémité avant du longeron 14 le plus extérieur, ainsi qu'à une traverse 16 sensiblement centrale, et éventuellement au longeron périphérique 42 situé à cet endroit.

Naturellement, comme cela a été évoqué ci-dessus, l'assemblage des différentes ferrures 70 avec les éléments qui viennent d'être mentionnés s'effectue de préférence à l'aide d'une pluralité de rivets orientés selon la direction Z, qui traversent chacun la ferrure associée 70 ainsi qu'au moins un autre des éléments concernés.

A nouveau en référence à la figure 5, on peut apercevoir que chacune des bielles 68 est orientée de manière à s'écarter du centre du plancher 4 en allant vers l'avant, contrairement aux longerons périphériques 42 qui s'écartent du centre du plancher 4 en allant vers l'arrière.

Plus précisément, chacune des six bielles 68, qui sont de préférence toutes agencées dans un même plan XY situé légèrement au-dessus de celui de la surface supérieure de la peau 62, est inclinée d'un angle α par rapport à la direction X qui est compris entre 0° et 30°. Préférentiellement, la valeur de l'angle α est choisie de façon à être la plus proche de 0°, et peut être différente pour chacune des bielles 68. Par ailleurs, ces bielles 68 sont chacune fixées à un voile longitudinal de fuselage 7b, comme cela a été décrit en référence à la figure 7.

En outre, il est souhaitable de ne pas choisir des bielles de longueurs trop importantes pour éviter les problèmes de flambage en compression, ni de longueurs trop courtes qui rendraient difficile le réglage de montage.

Bien entendu, diverses modifications peuvent être apportées par l'homme du métier au plancher de cockpit 4 qui vient d'être décrit, uniquement à titre d'exemple non limitatif sans sortir du cadre de l'invention défini par le texte des revendications.

## Revendications

1. Aéronef comprenant un plancher de cockpit (4), ledit plancher comportant une pluralité de longerons (14) s'étendant selon une direction longitudinale (X) de l'aéronef ainsi qu'une pluralité de traverses (16) assemblées auxdits longerons (14) et s'étendant selon une direction transversale (Y) de l'aéronef, les longerons (14) et les traverses (16) constituant une structure primaire (12) dudit plancher (4), ce dernier comportant également des moyens de fixation (64) permettant son assemblage sur le fuselage (7) de l'aéronef, **caractérisé en ce que** lesdits moyens de fixation (64) comprennent une pluralité de bielles (68) de reprise des efforts s'exerçant selon la direction longitudinale (X), lesdites bielles (68) disposant chacune d'une extrémité arrière raccordée à ladite structure principale (12) et d'une extrémité avant destinée à être raccordée audit fuselage (7), de sorte que chaque bielle (68) soit orientée de façon à s'écarter d'un centre dudit plancher (4) en allant vers l'avant.

2. Aéronef (4) selon la revendication 1, **caractérisé en ce que** l'extrémité avant est destinée à être raccordée à un voile longitudinal de fuselage (7b) monté fixement sur des cadres de fuselage (7a) du fuselage (7).

3. Aéronef (4) selon la revendication 1 ou la revendication 2, **caractérisé en ce que** l'extrémité arrière de chacune des bielles (68) est raccordée à une extrémité de l'un desdits longerons (14) et/ou à une extrémité de l'une desdites traverses (16), par l'intermédiaire d'une ferrure (70).

4. Aéronef (4) selon la revendication 3, **caractérisé en ce que** chaque ferrure (70) associée à une bielle (68) est d'une part montée fixement sur une extrémité de l'un desdits longerons (14) et/ou sur une extrémité de l'une desdites traverses (16), et d'autre part montée de façon articulée sur l'extrémité arrière de ladite bielle associée (68).

5. Aéronef (4) selon la revendication 4, **caractérisé en ce qu**'une articulation (72) entre la ferrure (70) et l'extrémité arrière de la bielle associée (68) est orientée selon une direction verticale (Z) de l'aéronef.

6. Aéronef (4) selon la revendication 4 ou la revendication 5, **caractérisé en ce que** chaque ferrure (70) est également montée fixement sur une peau (62) avec laquelle elle est en contact, cette peau (62), recouvrant la structure principale (12) du plancher (4), étant située entre la structure principale (12) et la ferrure (70).

7. Aéronef (4) selon l'une quelconque des revendications précédentes, **caractérisé en ce que** l'extrémité avant de chacune desdites bielles (68) est destinée à être montée de façon articulée sur le fuselage (7).

8. Aéronef (4) selon l'une quelconque des revendications précédentes, **caractérisé en ce que** chaque bielle (68) est située dans un plan défini conjointement par les directions longitudinale (X) et transversale (Y), et **en ce qu'**elle est inclinée par rapport à ladite direction longitudinale (X) d'un angle compris entre 0° et 30°.

9. Aéronef (4) selon l'une quelconque des revendications précédentes, **caractérisé en ce que** lesdits longerons (14) et lesdites traverses (16) sont réalisées en matériau composite.

10. Aéronef (4) selon la revendication 9, **caractérisé en ce que** lesdits longerons (14) et lesdites traverses (16) sont réalisés dans un matériau composite thermoplastique.

11. Aéronef (4) selon la revendication 10, **caractérisé en ce que** le matériau composite thermoplastique est réalisé à l'aide de plis de fibres de carbone imprégnés de résine PEEK, PEKK ou PPS.

## Claims

1. Aircraft comprising a cockpit floor (4), said floor incorporating a plurality of spars (14) extending along a longitudinal direction (X) of the aircraft and a plurality of cross-beams (16) assembled with said spars (14) and running along a transverse direction (Y) of the aircraft, the spars (14) and the cross-beams (16) forming a primary structure (12) of said floor (14), the floor also comprising attachment means (64) used to assemble it to the aircraft fuselage (7), **characterized in that** said attachment means (64) comprise a plurality of rods (68) resisting forces applied along the longitudinal direction (X), each of said rods (68) having an aft end connected to the main structure (12) and a forward end that will be connected to said fuselage (12), such that each rod (68) is oriented such that its distance from the centre of the floor (4) increases towards the forward end.

2. Aircraft (4) according to claim 1, **characterized in that** the forward end will be connected to a longitudinal fuselage wall (7b) fixed directly onto the fuselage frames (7a) of the fuselage (7).

3. Aircraft (4) according to claim 1 or 2, **characterized in that** the aft end of each of the rods (68) is connected to one end of one of said spars (14) and/or to one end of said cross-beams (16), through a fitting (70).

4. Aircraft (4) according to claim 3, **characterized in that** each fitting (70) associated with a rod (68) is firstly fixed to one end of one of said spars (14) and/or to one end of one of the cross-beams (16), and secondly articulated on the aft end of the associated rod (68).

5. Aircraft (4) according to claim 4, **characterized in that** an articulation (72) between the fitting (70) and the aft end of the associated rod (68) is oriented along a vertical direction (Z) of the aircraft.

6. Aircraft (4) according to claim 4 or 5, **characterized in that** each fitting (70) is also assembled fixed to a skin (62) with which it is in contact, this skin (62) covering the main structure (12) of the floor (4), located between the main structure (12) and the fitting (70).

7. Aircraft (4) according to one of the previous claims, **characterized in that** the forward end of each of said rods (68) will be assembled articulated on the fuselage (7).

8. Aircraft (4) according to any one of the previous claims, **characterized in that** each rod (68) is located in a plane defined jointly by the longitudinal (X) and transverse (Y) directions, and **in that** it is inclined at an angle of between 0° and 30° from said longitudinal direction (X).

9. Aircraft (4) according to any one of the previous claims, **characterized in that** said spars (14) and said cross-beams (16) are made from a composite material.

10. Aircraft (4) according to claim 9, **characterized in that** said spars (14) and said cross-beams (16) are made from a thermoplastic composite material.

11. Aircraft (4) according to claim 10, **characterized in that** the thermoplastic composite material is made using plies of carbon fibres impregnated with PEEK, PEKK or PPS resin.

## Patentansprüche

1. Luftfahrzeug mit einem Cockpitboden (4), wobei der Boden mehrere Längsträger (14) aufweist, die sich in einer Längsrichtung (X) des Luftfahrzeugs erstrecken, sowie mehrere Querträger (16), die an den Längsträgern (14) angebracht sind und sich in einer Querrichtung (Y) des Luftfahrzeugs erstrecken, wobei die Längsträger (14) und Querträger (16) eine Primärstruktur (12) des Bodens (4) bilden, wobei letzterer auch Befestigungsmittel (64) umfasst, die seine Montage am Rumpf (7) des Luftfahrzeugs ermöglichen,
**dadurch gekennzeichnet, dass** die Befestigungsmittel (64) mehrere Kurbelteile (68) zur Aufnahme von in der Längsrichtung (X) einwirkenden Kräften umfasst, wobei die Kurbelteile (68) jeweils ein mit der Hauptstruktur (12) verbundenes hinteres Ende und ein mit dem Rumpf (7) zu verbindendes vorderes Ende aufweisen, so dass jedes Kurbelteil (68) derart ausgerichtet ist, dass es sich von einer Mitte des Bodens (4) nach vorne entfernt.

2. Luftfahrzeug (4) nach Anspruch 1, **dadurch gekennzeichnet, dass** das vordere Ende mit einem Längsflügel (7b) des Rumpfes, der an dem Rahmen (7a) des Rumpfes (7) fest angebracht ist, zu verbinden ist.

3. Luftfahrzeug (4) nach Anspruch 1 oder 2, **dadurch gekennzeichnet, dass** das hintere Ende jedes der Kurbelteile (68) mit einem vorderen Ende eines der Längsträger (14) und/oder einem Ende eines der Querträger (16) über ein Beschlagteil (70) verbunden ist.

4. Luftfahrzeug (4) nach Anspruch 3, **dadurch gekennzeichnet, dass** jedes einem Kurbelteil (68) zugeordnete Beschlagteil (70) einerseits fest an einem Ende der Längsträger (14) und/oder einem Ende der Querträger (16) angebracht ist, und andererseits auf gelenkige Weise am hinteren Ende des zugeordneten Kurbelteils (68) angebracht ist.

5. Luftfahrzeug (4) nach Anspruch 4, **dadurch gekennzeichnet, dass** eine Gelenkverbindung (2) zwischen dem Beschlagteil (70) und dem hinteren Ende des zugeordneten Kurbelteils (68) in einer Vertikalrichtung (Z) des Luftfahrzeugs ausgerichtet ist.

6. Luftfahrzeug (4) nach Anspruch 4 oder 5, **dadurch gekennzeichnet, dass** jedes Beschlagteil (70) an einer Haut bzw. Umhüllung (62), mit der es in Kontakt steht, angebracht ist, wobei diese Haut (62), welche die Hauptstruktur (12) des Bodens (4) bedeckt, zwischen der Hauptstruktur (12) und dem Beschlagteil (70) gelegen ist.

7. Luftfahrzeug (4) nach einem der vorangehenden Ansprüche, **dadurch gekennzeichnet, dass** das vordere Ende jedes der Kurbelteile (68) auf gelenkige Weise am Rumpf (7) angebracht werden kann.

8. Luftfahrzeug (4) nach einem der vorangehenden Ansprüche, **dadurch gekennzeichnet, dass** jedes Kurbelteil (68) sich in einer Ebene befindet, die gemeinsam durch die Längsrichtung (X) und die Querrichtung (Y) festgelegt ist, und dass sie in Bezug auf die Längsrichtung (X) unter einem Winkel zwischen 0° und 30° geneigt ist.

9. Luftfahrzeug (4) nach einem der vorangehenden Ansprüche, **dadurch gekennzeichnet, dass** die Längsträger (14) und die Querträger (16) aus Verbundmaterial hergestellt sind.

10. Luftfahrzeug (4) nach Anspruch 9, **dadurch gekennzeichnet, dass** die Längsträger (14) und die Querträger (16) aus einem thermoplastischen Verbundmaterial hergestellt sind.

11. Luftfahrzeug (4) nach Anspruch 10. **dadurch gekennzeichnet, dass** das thermoplastische Verbundmaterial mittels mit PEEK-, PEKK- oder PPS-Harz getränkten Kohlenstofffaserlagen hergestellt ist.
